Europäisches Patentamt

European Patent Office

Office européen des brevets

(19)

(11) **EP 0 940 924 A2**

(12) **EUROPEAN PATENT APPLICATION**

(43) Date of publication:
08.09.1999 Bulletin 1999/36

(51) Int. Cl.⁶: $H04B\ 1/18$, $H04B\ 1/38$, $H01Q\ 1/24$

(21) Application number: 99102877.0

(22) Date of filing: 03.03.1999

(84) Designated Contracting States:
**AT BE CH CY DE DK ES FI FR GB GR IE IT LI LU MC NL PT SE**
Designated Extension States:
**AL LT LV MK RO SI**

(30) Priority: 03.03.1998 JP 5080398

(71) Applicant: **NEC CORPORATION**
**Minato-ku Tokyo (JP)**

(72) Inventor: **Takuji, Mochizuki**
**Minato-ku, Tokyo (JP)**

(74) Representative:
**VOSSIUS & PARTNER**
**Siebertstrasse 4**
**81675 München (DE)**

(54) **Mobile terminal equipment for satellite and land mobile radio communication**

(57) The object of mobile communication terminal equipment and its waiting reception method respectively according to the present invention is to prevent the performance of waiting reception particularly in waiting for a satellite from being deteriorated, maintaining portability in mobile communication terminal equipment which can be used in a satellite mobile communication network via a satellite and a land mobile communication network via an earth base station.

Therefore, according to the present invention, the waiting reception of a radio wave from a satellite is enabled by receiving a radio wave from a satellite by an antenna for land which is an antenna for a land mobile communication network in case an antenna for a satellite which is an antenna for a satellite mobile communication network is stored and inputting the high-frequency signal received by the antenna for land to a receiver for the satellite mobile communication network.

Fig. 1

## Description

The present invention relates to mobile communication terminal equipment which can be used in a satellite mobile communication network via a communication satellite and a land mobile communication network via an earth base station.

Heretofore, for this type of mobile communication terminal equipment, the typical configuration is disclosed in Japanese published unexamined patent application No. Hei 6-318902.

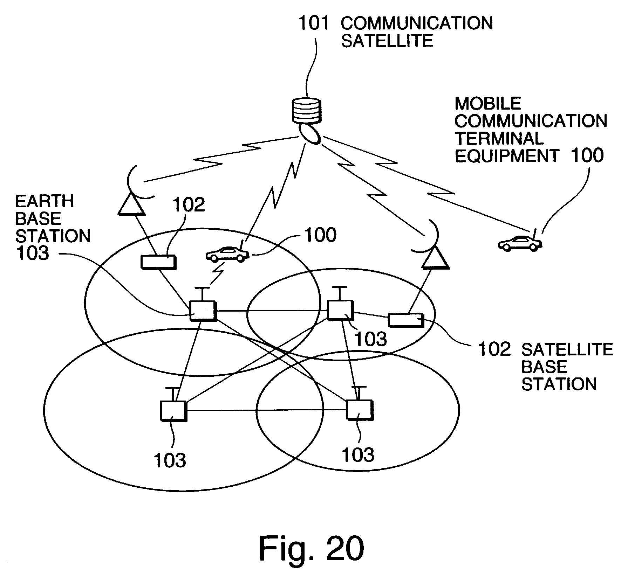

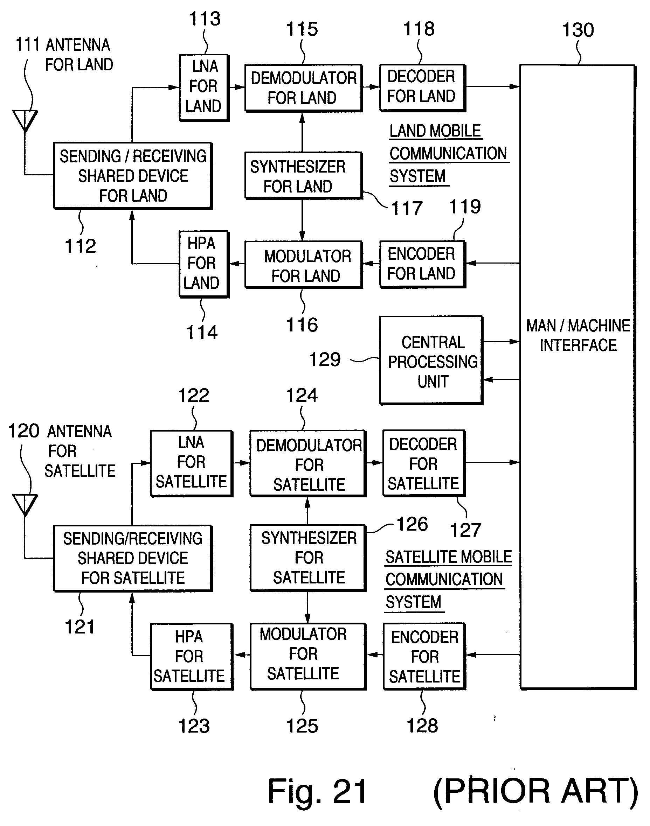

Fig. 20 is a schematic drawing showing the configuration of a mobile communication network in which mobile communication terminal equipment can be used. Fig. 21 is a block diagram showing the configuration of conventional type mobile communication terminal equipment.

As shown in Fig. 20, mobile communication terminal equipment 100 is terminal equipment which can be used in a satellite mobile communication network via a communication satellite 101 or a satellite base station 102 and a land mobile communication network via an earth base station 103. Mobile communication terminal equipment shown in Fig. 21 is provided with a land mobile communication system used for communication with an earth base station and a satellite mobile communication system used for communication with a satellite or a satellite base station and each system complies with different voice coding method and radio transmission method.

As shown in Fig. 21, the conventional type mobile communication terminal equipment is constituted by two mobile communication systems composed of a land mobile communication system and a satellite mobile communication system, a central processing unit 129 and a man/machine interface 130 respectively used in common in the land mobile communication system and the satellite mobile communication system.

The land mobile communication system is composed of an antenna for land 111 for sending or receiving a radio wave to/from a land base station, a sending/receiving shared device for land 112 for switching the path of the high-frequency signal corresponding to a sent state or a received state, a receiver for a land mobile communication system for demodulating and decoding the received high-frequency signal and regenerating its original signal such as voice, facsimile and data, a transmitter for a land mobile communication system for encoding and modulating the original signal and generating a signal to be sent and a synthesizer for land 117 for outputting a signalling frequency required for demodulating the received signal and modulating a signal to be sent.

The receiver for the land mobile communication system is provided with a low noise amplifier (LNA) for land 113 for amplifying a received signal, a demodulator for land 115 for demodulating the received signal amplified by LNA for land 113 and a decoder for land 118 for regenerating an original signal based upon a signal which is a digital signal and is output from the demodulator for land 115, and the transmitter for the land mobile communication system is provided with an encoder for land 119 for converting an original signal to a digital signal, a modulator for land 116 for modulating the digital signal output from the encoder for land 119 and a high power amplifier (HPA) for land 114 for amplifying a signal output from the modulator for land 116 up to power required for sending.

In the meantime, the satellite mobile communication system is composed of an antenna for a satellite 120 for sending or receiving a radio wave to/from a communication satellite or a satellite base station, a sending/receiving shared device for a satellite 121 for switching the path of the high-frequency signal corresponding to a sent state or a received state, a receiver for a satellite mobile communication system for demodulating and decoding the received high-frequency signal and regenerating its original signal such as voice, facsimile and data, a transmitter for a satellite mobile communication system for encoding and modulating an original signal and generating a signal to be sent and a synthesizer for a satellite 126 for outputting a signalling frequency required for demodulating the received signal and modulating a signal to be sent.

The receiver for the satellite mobile communication system is provided with a low noise amplifier (LNA) for a satellite 122 for amplifying a received signal, a demodulator for a satellite 124 for demodulating the received signal amplified by LNA for a satellite 122 and a decoder for a satellite 127 for regenerating an original signal based upon a signal which is a digital signal and is output from the demodulator for a satellite 124, and the transmitter for the satellite mobile communication system is provided with an encoder for a satellite 128 for converting an original signal to a digital signal, a modulator for a satellite 125 for modulating the digital signal output from the encoder for a satellite 128 and a high power amplifier (HPA) for a satellite 123 for amplifying a signal output from the modulator for a satellite 125 up to power required for sending.

The central processing unit 129 controls the radio transmission of the land mobile communication system and the satellite mobile communication system, movement and a call in the systems and executes processing for switching the land mobile communication system and the satellite mobile communication system. The man/machine interface 130 is a unit which a user directly operates such as ten keys, a keyboard, a telephone earphone/microphone and a display for displaying information.

In such configuration, in conventional type mobile communication terminal equipment, if the line of a land mobile communication network cannot be utilized when the channel of an earth base station is congested or in terminal calling regulation, call loss is reduced by detouring a call to a satellite mobile communication network.

For mobile communication terminal equipment, it is important to secure an incoming call in waiting reception. In a land mobile communication network, technology for securing a call by a switching network with which an earth base station is provided is established, however, in a satellite mobile communication network, mobile communication terminal equipment itself is required to execute waiting reception and secure an incoming call.

In a satellite mobile communication network in the next generation, it is estimated that even if the receiving performance of mobile communication terminal equipment is a wide solid angle and low gain, a call can be sufficiently communicated by the increase of receive field intensity by the enhancement of the performance of a communication device mounted in a satellite or adopting a diversity system owing to the increase of the number of satellite. However, in the current mobile communication terminal equipment, an antenna provided with strong directivity is required to be directed in the direction of a satellite, larger sending gain, larger sending power and larger receiving gain are required, compared with a land mobile communication system to secure communication quality and noise in receiving is required to be low. Further, as a circularly polarized wave is used for sending/receiving to/from a satellite, a larger-sized antenna for a satellite is required, compared with an antenna for land.

Therefore, to miniaturize mobile communication terminal equipment provided with the land mobile communication system and the satellite mobile communication system, it is desirable that an antenna for a satellite is housed or folded (hereinafter, generally called a stored state) in case communication with a satellite is not executed. However, a problem that as the performance of an antenna is remarkably deteriorated if the antenna for a satellite is housed in the body of the equipment, the performance of waiting reception cannot be secured is caused.

For a method for enhancing receiving performance, there is a method of using a diversity receiver disclosed in Japanese published unexamined patent application No. Hei 6-303173 for example.

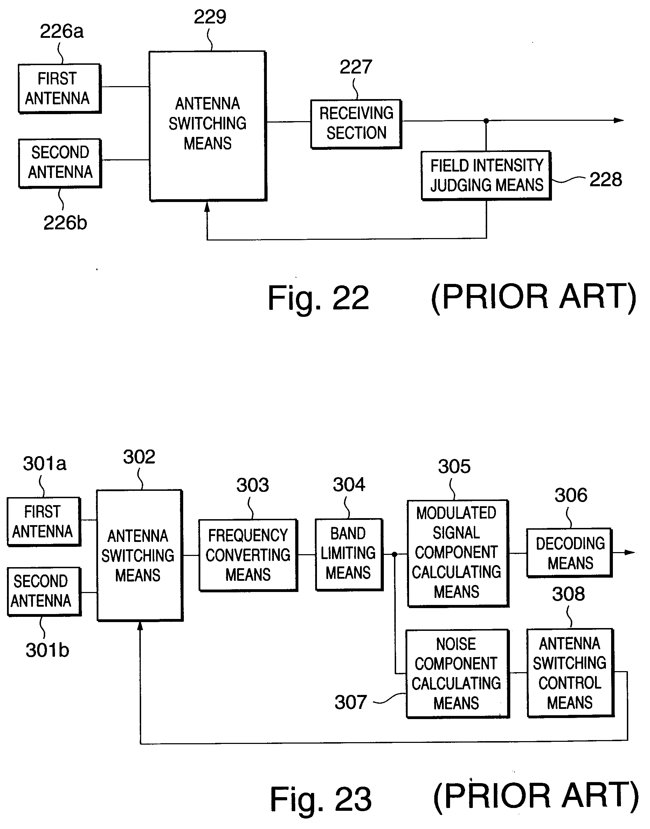

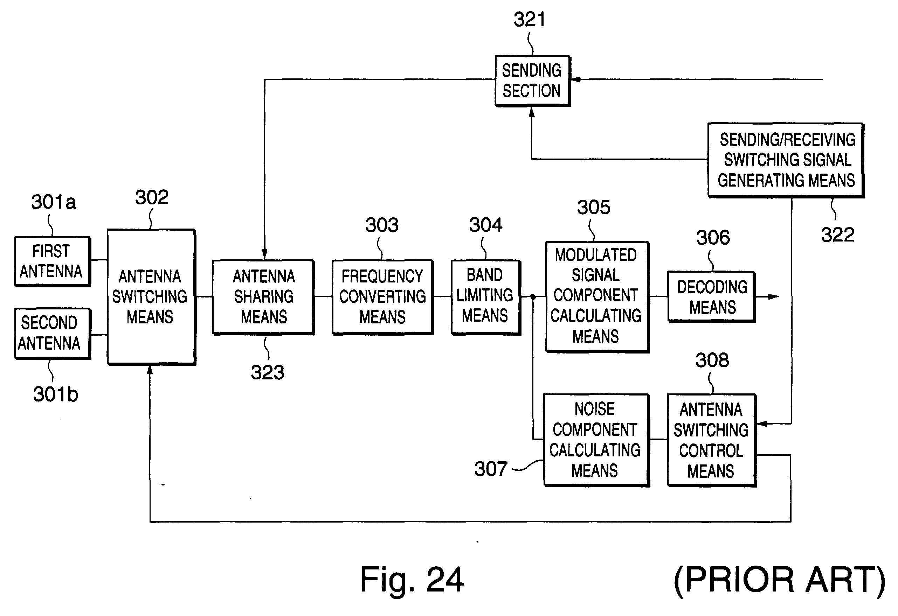

Fig. 22 is a block diagram showing the configuration of a diversity receiver. Fig. 23 is a block diagram showing configuration in which the directivity of the diversity receiver shown in Fig. 22 is enhanced. Fig. 24 is a block diagram showing configuration in which a sending function is provided to the diversity receiver shown in Fig. 23. The diversity receiver shown in Fig. 22 is provided with configuration described in the item of the description of the related art in Japanese published unexamined patent application No. Hei 6-303173 and shows the general configuration of a diversity receiver.

The diversity receiver shown in Fig. 22 is provided with a first antenna 226a and a second antenna 226b respectively provided with independent directivity and a radio wave is received by a receiving section 227 using either of the first antenna 226a or the second antenna 226b. Field intensity judging means 228 judges receive field intensity based upon the level of a received high-frequency signal and if receive field intensity is deteriorated, the above means instructs antenna switching means 229 to switch the antennas. Hereby, as a radio wave is always received via the antenna having larger receive field intensity, receiving performance can be enhanced.

In the meantime, the diversity receiver the directivity of which is enhanced shown in Fig. 23 is composed of a first antenna 301a and a second antenna 301b respectively provided with independent directivity, antenna switching means 302 for selectively switching the first antenna 301a and the second antenna 301b, frequency converting means 303 for converting a radio-frequency (RF) signal to an intermediate-frequency (IF) signal, band limiting means 304 for limiting the band of the IF signal, modulated signal component calculating means 305 for extracting a signal component from the IF signal the band of which is limited, decoding means 306 for decoding an original signal from the signal component extracted by the modulated signal component calculating means 305, noise component calculating means 307 for extracting a noise component from the IF signal the band of which is limited and antenna switching control means 308 for judging whether an antenna is to be switched or not based upon the noise component extracted by the noise component calculating means 307 and controlling the antenna switching means 302.

Fig. 24 shows configuration in which a sending section 321 for generating a signal to be sent, sending/receiving switching signal generating means 322 for respectively outputting a switching signal for switching a sent state or a received state to the sending section 321 and the antenna switching means 302 and antenna sharing means 323 for switching the path of an RF signal according to a sent state or a received state are added to the diversity receiver shown in Fig. 23 so as to also operate the diversity receiver as a transmitter.

In Japanese published unexamined patent application No. Hei 6-303173 disclosing these diversity receivers, as the antennas are required to be large-sized to enhance the directivity of the antenna for a satellite and in a mobile terminal which may be directed in various directions, the control of directivity is extremely complicated, it is described that an antenna for a satellite provided with relatively wide directivity is required. Also, as an antenna for a satellite provided with wide directivity readily receives noise from directions except the incoming direction of a radio wave and possibility in the antenna may output a disturbance to another receiver in transmission is high, it is described that an antenna for a satellite is required to be directed to a satellite as much as possible.

In Japanese published unexamined patent application No. Hei 6-303173, the diversity receiver in which the directions to a satellite are approximately equalized by respectively extracting a noise component input via the two antennas due to the earth and buildings and switching to the antenna a noise component of which is smaller when a noise component is increased based upon the above background art is disclosed. That is, according to the diversity receivers respectively shown in Figs. 23 and 24, the antenna of each mobile communication terminal equipment is directed not to the earth, buildings and others the noise temperature of which is high but to space and a satellite the noise temperature of which is low.

When a satellite mobile communication network in the next generation the object of which is operation on the worldwide scale is organized, flexible mobile communication terminal equipment which coexists with the existing land mobile communication network is required. Therefore, it is desirable that communication with a satellite can be independently executed without changing the land mobile communication network.

However, as a mobile communication network in which the land mobile communication network and a satellite mobile communication network are integrated is required to be newly organized according to the conventional type mobile communication terminal equipment shown in Fig. 21, a method of connecting a call in the existing land mobile communication network is required to be changed. An enterprise which can participate in a new mobile communication network in which the existing land mobile communication network and a satellite mobile communication network are integrated is limited to a large-scale enterprise.

To independently communicate with a satellite without changing the land mobile communication network, the above performance of waiting reception is required to be enhanced. However, if each configuration of the diversity receivers respectively shown in Figs. 22 to 24 is adopted as mobile communication terminal equipment to enhance the performance of waiting reception, the total three antennas composed of one antenna for land and two antennas for a satellite are required, the configuration of a front end becomes complicated and the cost is increased. Also, as the number of antennas is increased, the mobile communication terminal equipment is large-sized and as the weight is also increased, portability cannot be maintained.

The object of the present invention is to provide mobile communication terminal equipment and its waiting reception method wherein the performance of waiting reception can be prevented from being deteriorated, maintaining portability.

To achieve the above object, mobile communication terminal equipment according to the present invention is mobile communication terminal equipment which can be used in a satellite mobile communication network via a satellite and a land mobile communication network via an earth base station, and is provided with a high frequency switching device for a satellite for connecting the path of a high-frequency signal of a transmitter or a receiver for the above satellite mobile communication network to an antenna for a satellite which is an antenna for the above satellite mobile communication network according to a sent state or a received state, a high frequency switching device for land for connecting the path of a high-frequency signal of a transmitter or a receiver for the above land mobile communication network to an antenna for land which is an antenna for the above land mobile communication network according to a sent state or a received state, a high frequency path for connecting the above high frequency switching device for a satellite and the above high frequency switching device for land so that a high-frequency signal received via the above antenna for land is input to the receiver for the above satellite mobile communication network and a high frequency switching device controller for detecting whether the above antenna for a satellite is stored or not in waiting and receiving a radio wave from the above satellite, for connecting the above high frequency switching device for a satellite and the above high frequency switching device for land via the above high frequency path in case the above antenna for a satellite is stored and for connecting the transmitter or the receiver for the above satellite mobile communication network and the above antenna for a satellite by the above high frequency switching device for a satellite according to a sent state or a received state in case the above antenna for a satellite is not stored.

The above antenna for land is respectively matched with the frequency band of a radio wave sent or received in the above land mobile communication network and the frequency band of a radio wave received in the above satellite mobile communication network, and the above high frequency switching device for a satellite and the above high frequency switching device for land are respectively provided with plural single-pole double-throw (SPDT) switches.

In the meantime, the waiting reception method of mobile communication terminal equipment according to the present invention is the waiting reception method of mobile communication terminal equipment for waiting and receiving a radio wave from a satellite by mobile communication terminal equipment which can be used in a satellite mobile communication network via the satellite and a land mobile communication network via an earth base station, and is a method of receiving a radio wave from a satellite via an antenna for land which is an antenna for the above land mobile communication network if an antenna for a satellite which is an antenna for the above satellite mobile communication network is stored and inputting a high-frequency signal received via the above antenna for land to a receiver for the above satellite mobile communication network.

The waiting reception method of the mobile communication terminal equipment according to the present invention is also a method of matching the above antenna for land with the frequency band of a radio wave sent or received in the above land mobile communication network and the frequency band of a radio wave received in the above satellite mobile communication network beforehand and inputting a high-frequency signal received via the above antenna for land to the receiver for the above satellite mobile communication network via the SPDT switch.

According to the mobile communication terminal equipment constituted as described above and its waiting reception method, a radio wave from a satellite is received via the antenna for land and the received high-frequency signal is input to the receiver for the satellite mobile communication network. As receive gain is larger in case a radio wave from a satellite is received via the antenna for land than that in case a radio wave from a satellite is received via the antenna for a satellite in a stored state, waiting reception can be also executed in a state in which the antenna for a satellite which is larger-sized, compared with the antenna for land is stored.

BRIEF DESCRIPTION OF THE DRAWINGS

Fig. 1 is a block diagram showing the configuration of mobile communication terminal equipment according to the present invention;

Fig. 2 is a block diagram showing the normal operation of the mobile communication terminal equipment shown in Fig. 1;

Fig. 3 is a block diagram showing the operation in waiting reception of the mobile communication terminal equipment shown in Fig. 1;

Fig. 4 is a block diagram showing an example of the configuration of an antenna for a satellite shown in Fig. 1;

Fig. 5 is a mounting drawing showing the configuration of the antenna for a satellite shown in Fig. 4;

Fig. 6 is a mounting drawing showing the configuration of an antenna for land shown in Fig. 1;

Figs. 7A and 7B respectively show an example of the structure of the mobile communication terminal equipment shown in Fig. 1 and are structure drawings respectively showing the used state and the stored state of the antenna for land and the antenna for a satellite;

Figs. 8A and 8B respectively show another example of the structure of the mobile communication terminal equipment shown in Fig. 1 and are structure drawings respectively showing the used state and the stored state of an antenna for land and an antenna for a satellite;

Fig. 9 is a circuit connection diagram showing an example of the configuration of a high frequency switching device for land and a frequency switching device for a satellite respectively shown in Fig. 1;

Fig. 10 is a circuit connection diagram showing the path of a high-frequency signal in normal transmission in case the mobile communication terminal equipment shown in Fig. 1 executes satellite communication;

Fig. 11 is a circuit connection diagram showing the path of a high-frequency signal in normal reception in case the mobile communication terminal equipment shown in Fig. 1 executes satellite communication;

Fig. 12 is a circuit connection diagram showing the path of a high-frequency signal in normal transmission in case the mobile communication terminal equipment shown in Fig. 1 executes land communication;

Fig. 13 is a circuit connection diagram showing the path of a high-frequency signal in normal reception in case the mobile communication terminal equipment shown in Fig. 1 executes land communication;

Fig. 14 is a circuit connection diagram showing the path of a high-frequency signal in case the mobile communication terminal equipment shown in Fig. 1 executes the waiting reception of a radio wave from a satellite;

Fig. 15 is a graph showing an example of the characteristic of Eb/No to BER;

Fig. 16 is a circuit connection diagram showing another example of the configuration of the high frequency switching device for land and the high frequency switching device for a satellite respectively shown in Fig. 1;

Fig. 17 is a perspective view showing another example of the configuration of the antenna for a satellite shown in Fig. 1;

Figs. 18A and 18B are structure drawings respectively showing a state in which a plane patch antenna is mounted on mobile communication terminal equipment and a state in which it is stored in case the plane patch antenna shown in Fig. 17 is adopted;

Fig. 19 is a block diagram showing an example of the configuration of a front end of mobile communication terminal equipment in a triple mode;

Fig. 20 is a schematic drawing showing the configuration a mobile communication network in which mobile communication terminal equipment can be used;

Fig. 21 is a block diagram showing the configuration of conventional type mobile communication terminal equipment;

Fig. 22 is a block diagram showing the configuration of a diversity receiver;

Fig. 23 is a block diagram showing configuration in which the directivity of the diversity receiver shown in Fig. 22 is enhanced; and

Fig. 24 is a block diagram showing configuration in which a sending function is provided to the diversity receiver shown in Fig. 23.

DETAILED DESCRIPTION OF PREFERRED EMBODIMENTS

Next, referring to the drawings, the present invention will be described.

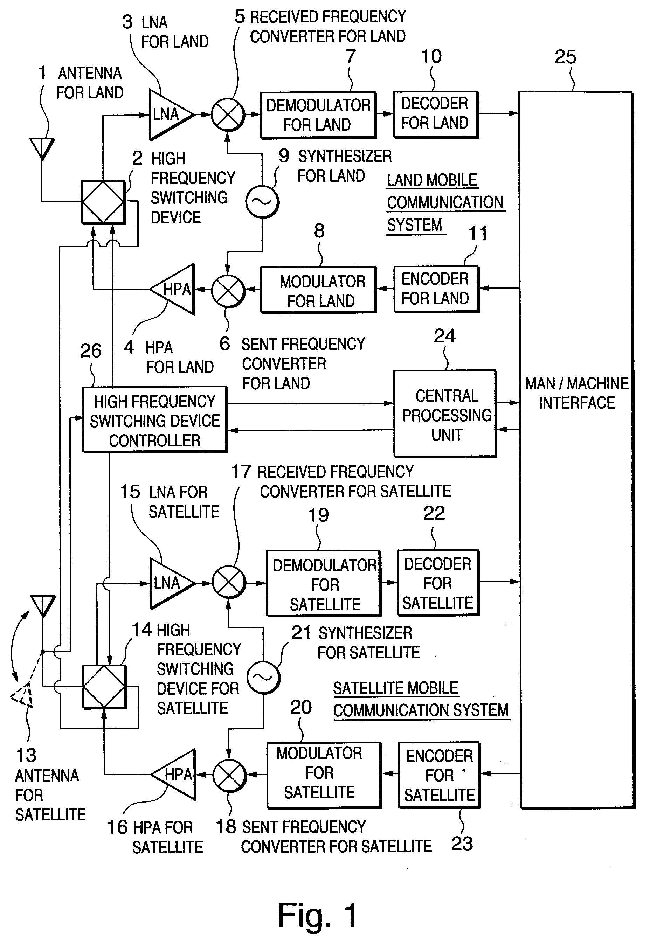

Fig. 1 is a block diagram showing the configuration of mobile communication terminal equipment according to the present invention.

As shown in Fig. 1, mobile communication terminal equipment according to the present invention is constituted by two mobile communication systems composed of a land mobile communication system and a satellite mobile communication system, a central processing unit 24 used in common for the land mobile communication system and the satellite mobile communication system, a man/machine interface 25 and a high frequency switching device controller 26.

The land mobile communication system is constituted by an antenna for land 1 for sending or receiving a radio wave to/from a land base station, a high frequency switching device for land 2 for switching the path of a high-frequency signal corresponding to a sent state or a received state, a receiver for the land mobile communication system for demodulating and decoding a received high-frequency signal and regenerating its original signal, a transmitter for the land mobile communication system for encoding and modulating an original signal and generating a signal to be sent and a synthesizer for land 9 for outputting a signalling frequency required for demodulating a received signal and modulating a signal to be sent.

The receiver for the land mobile communication system is provided with LNA for land 3 for amplifying a received signal, a received frequency converter for land 5 for converting a received high-frequency (RF) signal output from LNA for land 3 to an intermediate frequency (IF) signal, a demodulator for land 7 for demodulating the received signal output from the received frequency converter for land 5 and a decoder for land 10 for regenerating an original signal based upon a signal which is a digital signal and is output from the demodulator for land 7, and the transmitter for the land mobile communication system is provided with an encoder for land 11 for converting an original signal to a digital signal, a modulator for land 8 for modulating the digital signal output from the encoder for land 11, a sending frequency converter for land 6 for converting an IF signal output from the modulator for land 8 to a sending high-frequency (RF) signal and a high power amplifier (HPA) for land 4 for amplifying a signal output from the sending frequency converter for land 6 up to power required for sending.

In the meantime, the satellite mobile communication system is constituted by an antenna for a satellite 13 for sending or receiving a radio wave to/from a communication satellite or a satellite base station, a high frequency switching device for a satellite 2 for switching the path of a high-frequency signal corresponding to a sent state or a received state, a receiver for the satellite mobile communication system for demodulating and decoding a received high-frequency signal and regenerating its original signal, a transmitter for the satellite mobile communication system for encoding and modulating an original signal and generating a signal to be sent and a synthesizer for a satellite 21 for outputting a signalling frequency required for demodulating a received signal and modulating a signal to be sent.

The receiver for the satellite mobile communication system is provided with LNA for a satellite 15 for amplifying a received signal, a received frequency converter for a satellite 17 for converting a received high-frequency (RF) signal output from LNA for a satellite 15 to an intermediate frequency (IF) signal, a demodulator for a satellite 19 for demodulating the received signal output from the received frequency converter for a satellite 17 and a decoder for a satellite 22 for regenerating an original signal based upon a signal which is a digital signal and is output from the demodulator for a satellite 19, and the transmitter for the satellite mobile communication system is provided with an encoder for a satellite 23 for converting an original signal to a digital signal, a modulator for a satellite 20 for modulating the digital signal output from the encoder for a satellite 20, a sending frequency converter for a satellite 18 for converting an IF signal output from the modulator for a satellite 20 to a sending high-frequency (RF) signal and HPA for a satellite 16 for amplifying a signal output from the sending frequency converter for a satellite 18 up to power required for sending.

The central processing unit 24 controls the radio transmission of the land mobile communication system and the satellite mobile communication system, movement and a call in the systems and executes processing for switching the land mobile communication system and the satellite mobile communication system. The man/machine interface 25 is a unit which a user directly operates such as ten keys, a keyboard, a telephone earphone/microphone and a display for displaying information.

The high frequency switching device controller 26 controls the high frequency switching device for land 2 and the high frequency switching device for a satellite 14, switches the path of a high-frequency signal according to a sent state or a received state, detects the state (a stored state or a used state) of the antenna for a satellite 13 and controls so that a high-frequency signal received by the antenna for land 1 is input to LNA for a satellite 15 in case the antenna for a satellite 13 is stored.

The antenna for a satellite 13 is an antenna for a linearly polarized wave matched with a frequency band for land mobile communication and a frequency band for satellite mobile communication. The high frequency switching device for land 2 and the high frequency switching device for a satellite 14 are respectively provided with a terminal for sending, a terminal for receiving, a terminal for an antenna and a terminal used in waiting for a satellite.

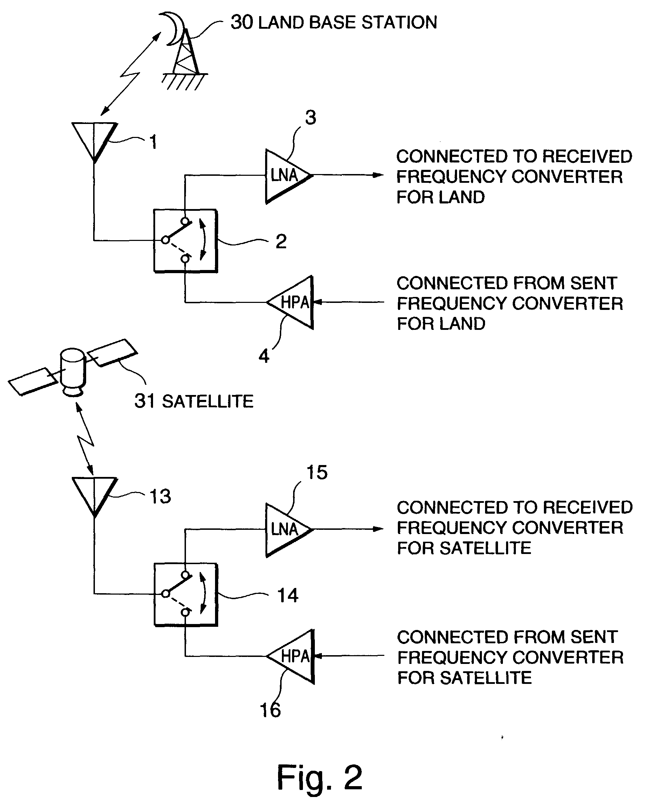

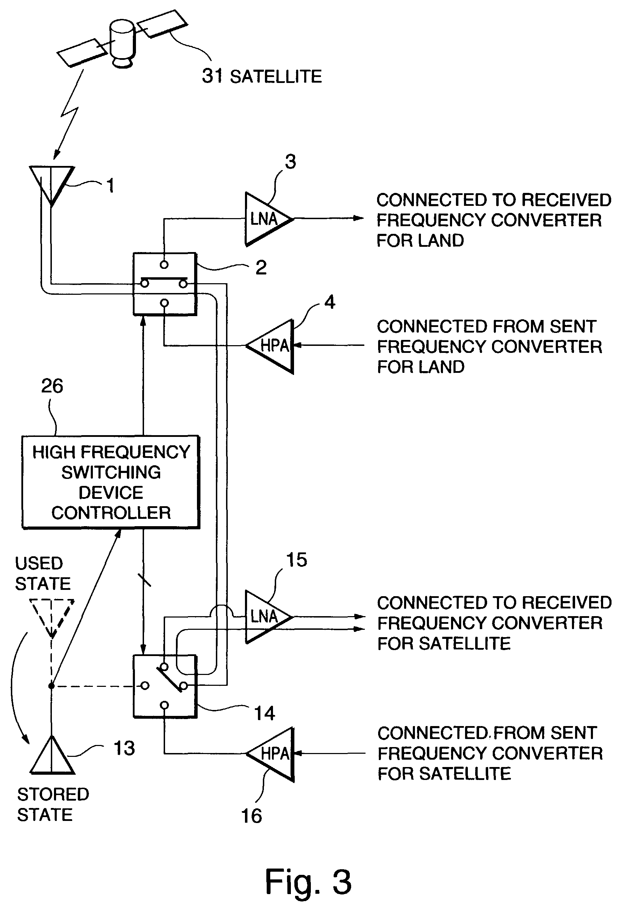

Next, referring to Figs. 2 and 3, the operation of the mobile communication terminal equipment shown in Fig. 1 provided with the above configuration will be described.

Fig. 2 is a block diagram showing the normal operation of the mobile communication terminal equipment shown in Fig. 1. Fig. 3 is a block diagram showing the operation in waiting reception of the mobile communication terminal equipment shown in Fig. 1.

As shown in Fig. 2, in normal land mobile communication via a land base station 30, the central processing unit 24 controls the high frequency switching device for land 2 using the high frequency switching device controller 26 and switches the path of a high-frequency signal so that a signal received by the antenna for land 1 is input to LNA for land 3 and the signal output from the HPA for land 4 is input to the antenna for land 1. Similarly, in normal satellite mobile communication via a satellite 31, the central processing unit controls the high frequency switching device for a satellite 14 using the high frequency switching device controller 26 and switches the path of a high-frequency signal so that a signal received by the antenna for a satellite 13 is input to LNA for a satellite 15 and a signal output from HPA for a satellite 16 is input to the antenna for a satellite 13.

In the meantime, in the waiting reception of a radio wave from the satellite 31 as shown in Fig. 3, the central processing unit detects using the high frequency switching device controller 26 whether the antenna for a satellite 13 is stored or not, respectively controls the high frequency switching device for land 2 and the high frequency switching device for a satellite 14 using the high frequency switching device controller 26 in case the antenna for a satellite 13 is stored and switches the path of a high-frequency signal so that a signal received by the antenna for land 1 is input to LNA for a satellite 15. At this time, a radio wave sent from the satellite 31 is received by the antenna for land 1. A radio wave sent from the satellite 31 is a TDM received wave (a circularly polarized wave) including a paging channel and a broadcast channel.

When a radio wave from a satellite is input to the antenna for land 1, the receive gain is deteriorated up to approximately 1/2 (-3 dB). Receive gain Gr is normally acquired using an expression, $Gr = \{Ar (m^2) \times \eta r \times 4\pi\}/\lambda^2$ (Ar: aperture area of antenna, $\eta r$: antenna efficiency, $\lambda$: wavelength of received radio wave) and as the receive gain for a radio wave for satellite communication acquired using the same effective antenna aperture area ($Ar \times \eta r$) is in inverse proportion to the square of a wavelength $\lambda$ if the receive gain for a radio wave for land communication of the antenna for land 1 is 0 dBi, the above receive gain can be acquired using the following expression (however, a communication frequency f (satellite) = 2170 MHz and a communication frequency f (land) = 960 MHz):

$$Gr \text{ (satellite)} = \{(Ar \times \eta r) \times 4\pi\}/\lambda^2 \text{ (satellite)}$$
$$= Gr \text{ (land)} \times \{f^2 \text{ (satellite)}/f^2 \text{ (land)}\}$$
$$= 7dBi$$

That is, the peak gain of the antenna for land 1 when a radio wave from a satellite is received is 7 dBi. A receive gain pattern is deteriorated by approximately 10 dB in the worst case at the elevation of 20° or more. Therefore, the worst value of receive gain is a value, -6 dB acquired by calculating an expression, -3 dB + 7 dB - 10 dB = -6 dB.

However, as the receive gain of the antenna for a satellite 13 in a stored state is generally deteriorated up to 20 dBi or less, receiving performance in case a radio wave from the satellite 31 is received by the antenna for land 1 can be improved by approximately 14 dB, compared with the receiving performance of the antenna for a satellite 13 in a stored state. The satellite mobile communication system for receiving a radio wave from the satellite 31 enables the waiting reception of a low value of carrier power/noise power (carrier-to-noise ratio) (C/N) by normally executing processing such as error correction (FEC). Therefore, it is conceivable that antenna gain deteriorated because a radio wave is received by the antenna for land 1 and the increment of a noise component can be absorbed.

The mobile communication terminal equipment which detects call in from the satellite 31 reports call in from the satellite 31 by displaying on a display or using sound and others. When a user sets the antenna for a satellite 13 from a stored state to a used state, the used state of the antenna for a satellite 13 is detected by the high frequency switching device controller 26, and the antenna for a satellite 13 and the satellite mobile communication system are connected by the high frequency switching device for land 2 and the high frequency switching device for a satellite 14. As a call is connected via the satellite mobile communication system in such a state, normal satellite communication can be executed.

Therefore, the configuration of a diversity receiver is not required to be adopted so as to enhance receiving performance by receiving a radio wave from a satellite by the antenna for land 1 and inputting a received high-frequency signal to the receiver for the satellite mobile communication system and as the increase of the number of antennas and the weight, the increase in size and the complication of a front-end circuit are prevented, the portability of the mobile communication terminal equipment can be maintained.

Also, as the existing land mobile communication network is not required to be changed, the mobile communication terminal equipment which can utilize a land mobile communication network and a satellite mobile communication network can be obtained at low cost and early.

Next, referring to the drawings, each component of the mobile communication terminal equipment shown in Fig. 1 will be described in detail. A case that for satellite communication, a radio wave the sending frequency of which is 1985 to 2015 MHz and the received frequency of which is 2170 to 2200 MHz is used and for land communication, a radio wave the sending frequency of which is 890 to 915 MHz and the received frequency of which is 935 to 960 MHz is used will be described below.

First, LNA for a satellite 15 is composed of a high electron mobility transistor (HEMT) and is designed so that the noise figure (NF) of a receiving circuit composed of LNA for a satellite 15 and the following circuits is approximately 1 dB. As the loss of the high frequency switching device for a satellite 14 is approximately 1 dB, the total NF of the satellite mobile communication system (the receiver) is 2 dB.

HPA for a satellite 16 is composed of a GaAs field-effect transistor (FET) and the power of +36 dBm (4W) is output. Therefore, at the connection terminal of the antenna for a satellite 13, the power of +35 dBm (3.2 W) acquired by subtracting the loss (= 1 dB) of the high frequency switching device for a satellite 14 is output.

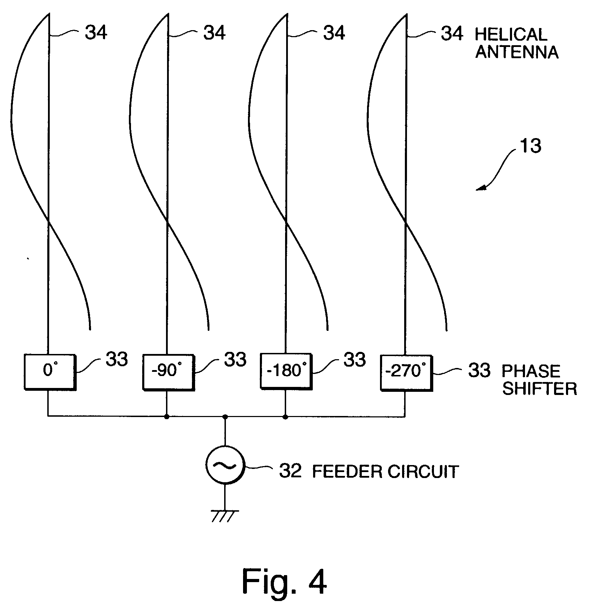

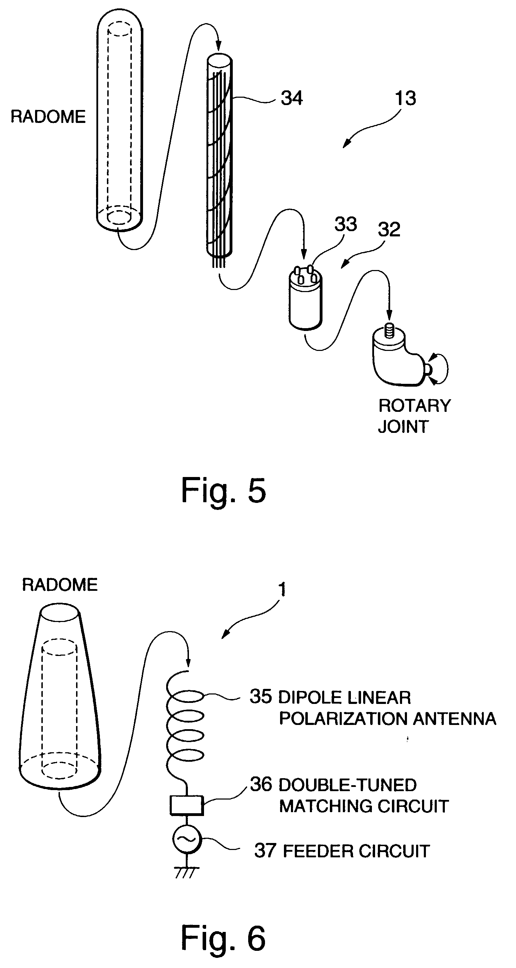

The antenna for a satellite 13 is composed of a feeder circuit 32, a phase shifter 33 and four bar antennas for circular polarization (helical antennas 34) respectively provided with a helical element as shown in Fig. 4. For the phase shifter 33, a ringing hybrid circuit and a branch line hybrid circuit are used. Fig. 5 shows a mounting drawing for reference of the antenna for a satellite 13 shown in Fig. 4.

The receive gain in a used state of the antenna for a satellite 13 shown in Fig. 4 is 2 dBi (at the elevation of 20° or more) including the loss of the feeder circuit 32 and the noise temperature of the antenna is 150 K. The receive gain in a stored state is -20 dBi (in the direction of the zenith), the noise temperature of the antenna is 300 K and a value acquired by subtracting the receive gain in a used state from the receive gain in a stored state is -22 dB.

In the meantime, LNA for land 3 is composed of a bipolar transistor and is designed so that NF of a receiving circuit composed of LNA for land 3 and the following circuits is approximately 6 dB. As the loss of the high frequency switching device for land 2 is approximately 1 dB, NF of the receiver for the land mobile communication system is 7 dB.

HPA for land 4 is composed of GaAs FET or metal oxide semiconductor (MOS) FET and the power of +34 dBm (2.5 W) is output. Therefore, at the connection terminal of the antenna for land 1, the power of +33 dBm (2 W) acquired by subtracting the loss (= 1 dB) of the high frequency switching device for land 2 is output.

The antenna for land 1 is composed of a dipole linear polarization antenna 35 formed helically to enhance inductance, a double-tuned matching circuit 36 for matching the antenna for land 1 with a sending/received frequency band for land communication and a received frequency band for satellite communication and a feeder circuit 37 as shown in Fig. 6.

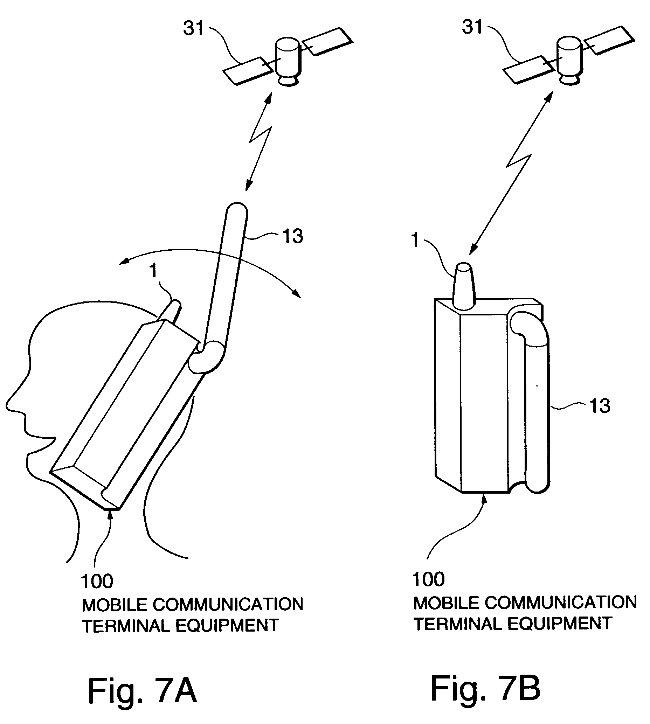

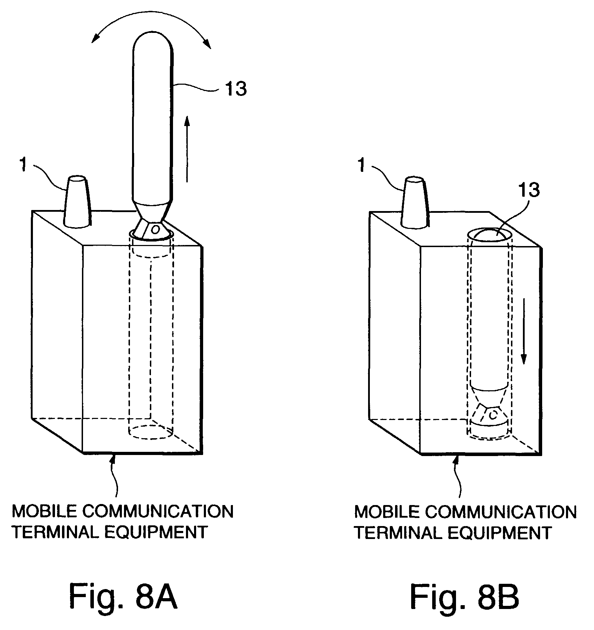

The antenna for land 1 is matched not only with a sending/received frequency band for land communication but with a received frequency band for satellite communication by the double-tuned matching circuit 36. The receive gain including the loss of the feeder circuit 37 is 0 dBi in a sending/receiving band for land communication and the noise temperature of the antenna is 300 K because the antenna for land is excellent in directivity in a horizontal direction, compared with the antenna for a satellite 13 and catches ground noise. In a received frequency band for satellite communication, the quantity of the loss of power (= -3 dB) caused by receiving a circularly polarized wave using the antenna for linear polarization, the increment (= +7 dBi) of gain acquired by the same effective aperture area and the quantity (= -10 dB) of the deterioration of a gain pattern in the direction of an elevation are added, receive gain is -6 dBi and the noise temperature of the antenna is 300 K as in the sending/receiving band for land communication. Therefore, when a radio wave from a satellite is received using the antenna for land 1 provided with the double-tuned matching circuit 36, receive gain is improved by approximately 14 dB, compared with the antenna for a satellite 13 in a stored state. Figs. 7A and 7B and Figs. 8A and 8B respectively show a state in which the antenna for land 1 is attached to the mobile communication terminal equipment 100, the used state and the stored state of the antenna for a satellite 13.

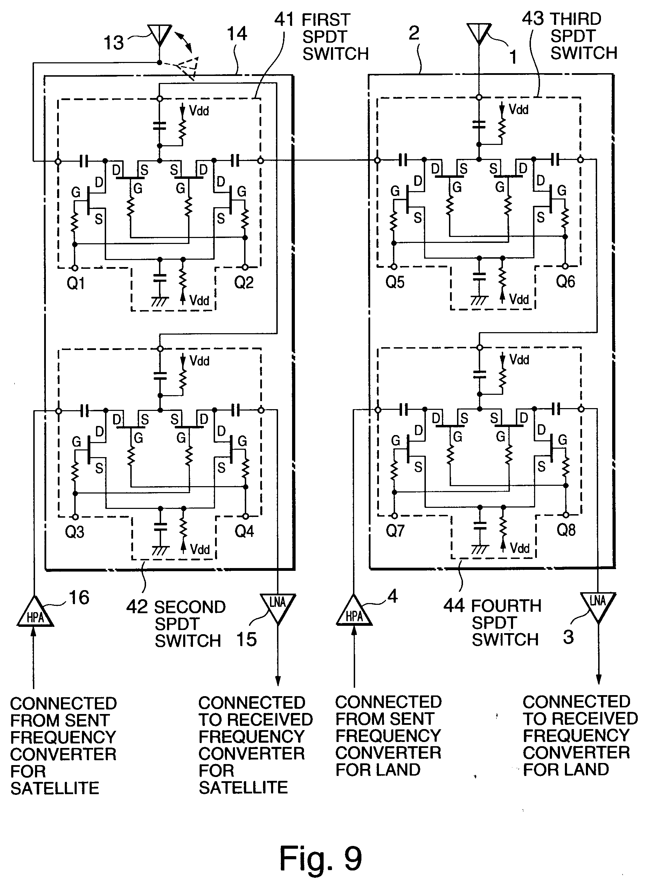

Next, referring to Figs. 9 to 14, the configuration of the high frequency switching device for a satellite 14 and the high frequency switching device for land 2 will be described.

As shown in Fig. 9, the high frequency switching device for a satellite 14 is constituted by two single-pole double-throw (SPDT) switches (a first SPDT switch 41 and a second SPDT switch 42) respectively composed of GaAs FET. Similarly, the high frequency switching device for land 2 is constituted by two SPDT switches (a third SPDT switch 43 and a fourth SPDT switch 44) respectively composed of GaAs FET.

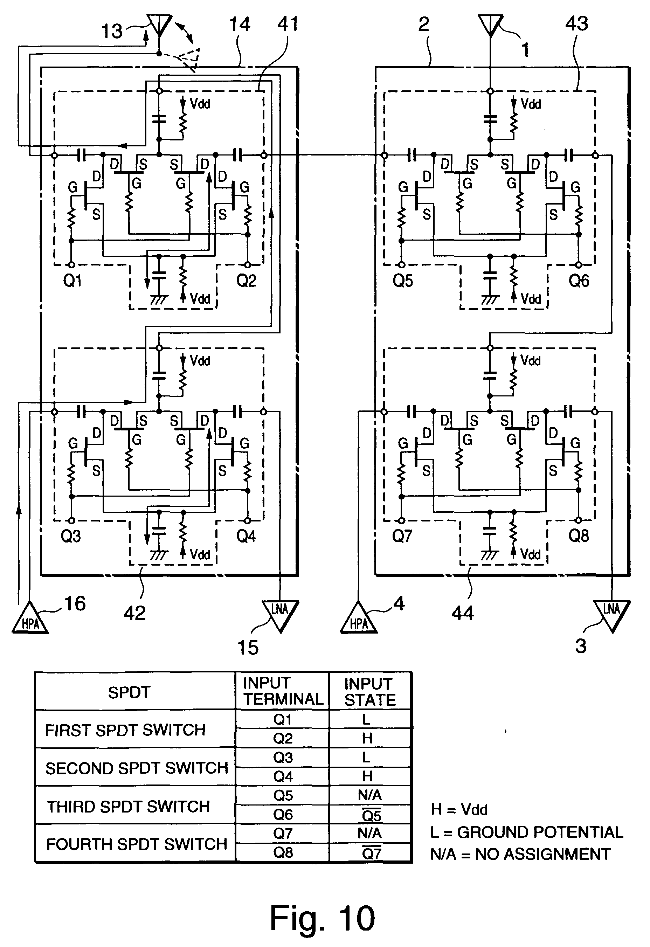

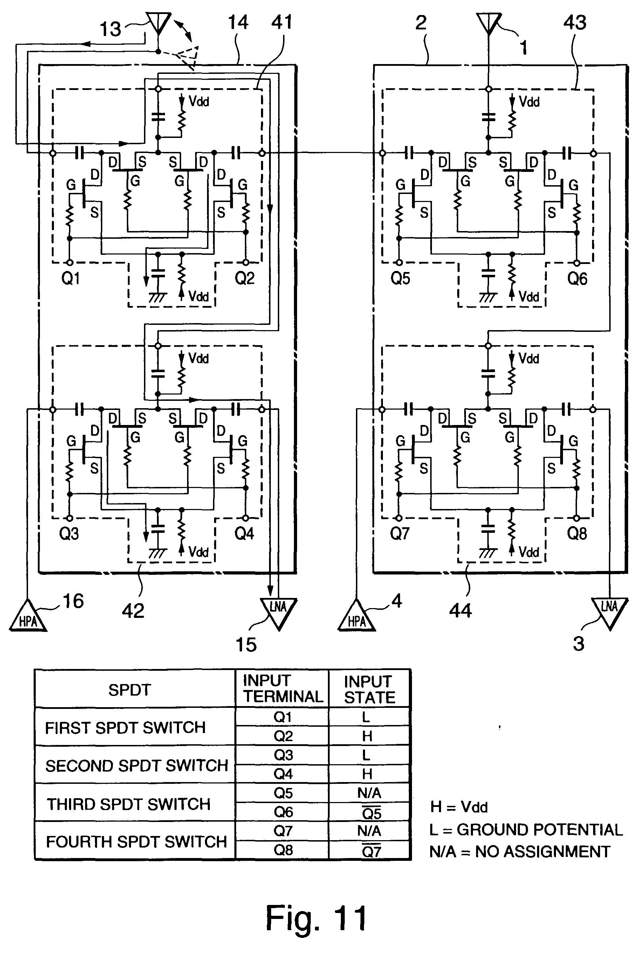

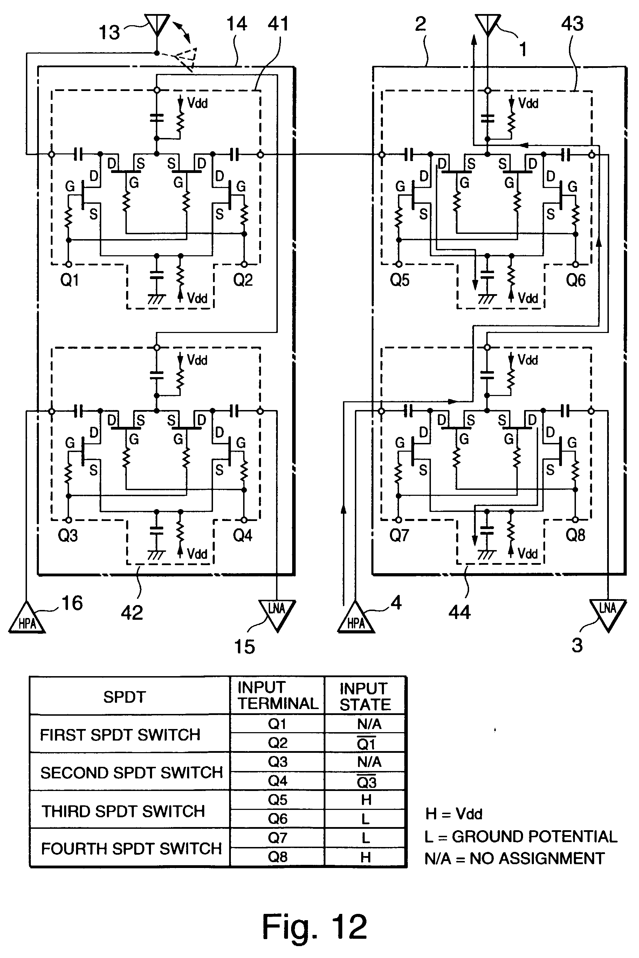

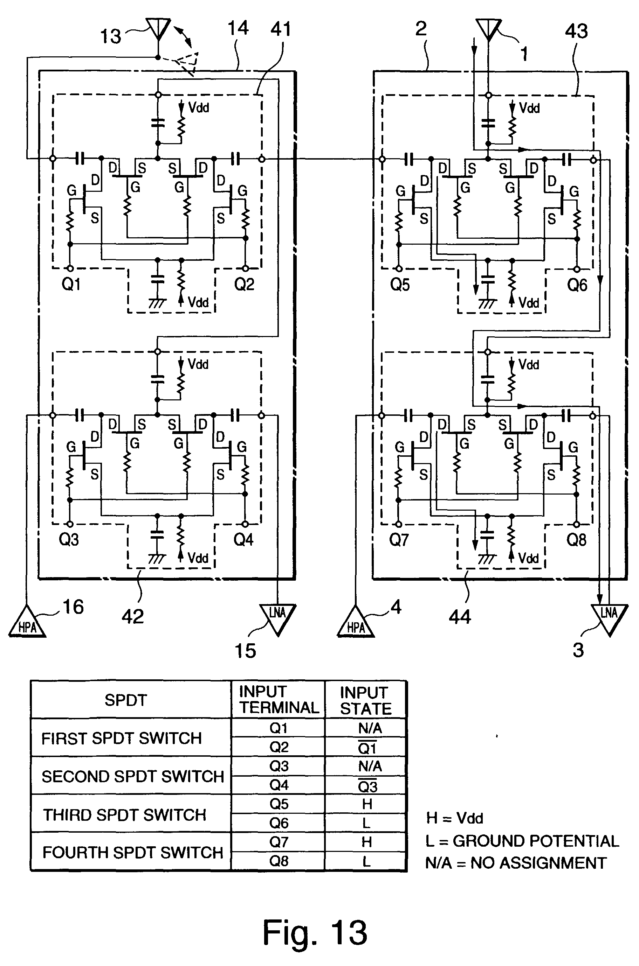

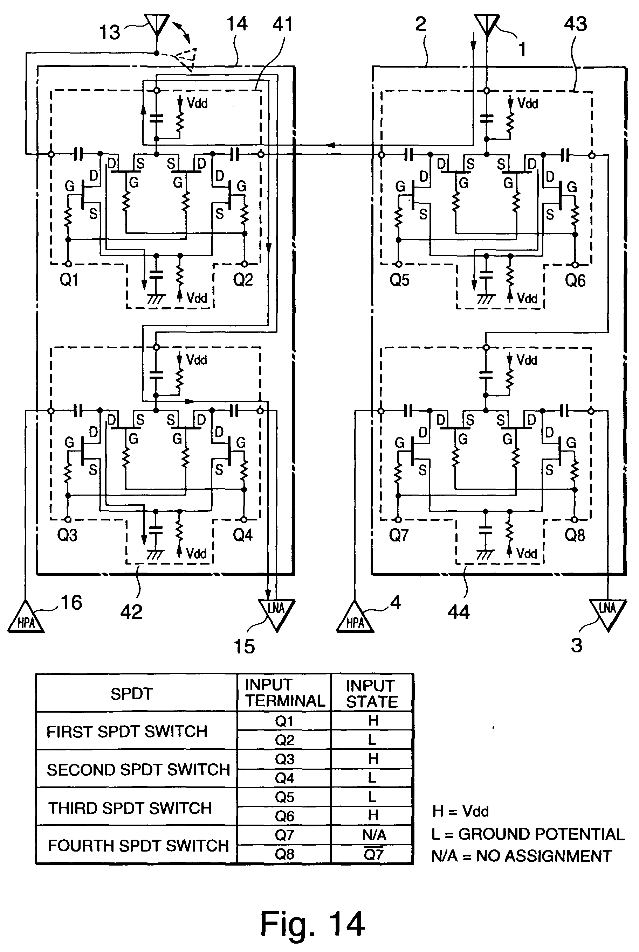

Each SPDT switch with which the high frequency switching device for a satellite 14 and the high frequency switching device for land 2 are provided is controlled according to whether normal sending/receiving or waiting reception as shown in Figs. 10 to 14. An arrow shown in Fig. 10 shows the path of a high-frequency signal in normal sending in the case of satellite communication and an arrow shown in Fig. 11 shows the path of a high-frequency signal in normal receiving in the case of satellite communication. An arrow shown in Fig. 12 shows the path of a high-frequency signal in normal sending in the case of land communication and an arrow shown in Fig. 13 shows the path of a high-frequency signal in normal receiving in the case of land communication. Further, an arrow shown in Fig. 14 shows the path of a high-frequency signal in the case of the waiting reception of a radio wave from a satellite. Q1 to Q8 shown in Figs. 9 to 14 respectively show the control voltage input terminal of the high frequency switching device for a satellite 14 and the high frequency switching device for land 2. A control voltage signal is input to Q1 to Q8 from the high frequency switching device controller 26. "G" shown in Figs. 9 to 14 denotes the gate of GaAs FET, "D" denotes the drain of GaAs FET and "S" denotes the source of GaAs FET.

As shown in Figs. 9 to 14, the high frequency switching device for a satellite 14 and the high frequency switching device for land 2 cut a bias component (a linear component) using a capacitor and short-circuit a high-frequency component to ground potential to secure isolation when the path of a high-frequency signal is off. Hereby, the above switching devices can be operated by a single power source Vdd provided with straight polarity.

The path of a high-frequency signal can be switched at high speed and the consumption of current can be reduced respectively by constituting the high frequency switching device for a satellite 14 and the high frequency switching device for land 2 by the SPDT switch using GaAs FET. As the circuit of the high frequency switching device for a satellite 14 and the high frequency switching device for land 2 can be integrated on a GaAs substrate, isolation between elements for a high-frequency signal can be sufficiently secured.

If the two high frequency switching devices are composed of a separate integrated circuit (IC), the high frequency switching device for a satellite 14 and the high frequency switching device for land 2 are connected by forming a microstrip line of 50 Ω on a glass epoxy substrate mounting IC for realizing the function of another component. If the two high frequency switching devices are composed of one IC, the high frequency switching device for a satellite 14 and the high frequency switching device for land 2 are connected by forming a microstrip line of 50 Ω on a GaAs substrate.

In the mobile communication terminal equipment according to the present invention, the performance of the waiting reception of a radio wave from a satellite is prevented from being deteriorated by executing the waiting reception of a radio wave from a satellite using the antenna for land 1 as described above, maintaining the portability of the mobile communication terminal equipment.

It will be described below that receiving performance can be sufficiently secured in the case of waiting reception using the antenna for land 1, comparing with a case that the antenna for a satellite 13 in a stored state is used for waiting reception. The above receiving performance is verified by the removed effect of C/N and effect in which a bit error rate (BER) is reduced.

As described above, if the waiting reception of a radio wave from a satellite is executed by the antenna for land 1 provided with the double-tuned matching circuit 36, the noise temperature of the antenna is 300 K because for a noise component, ground noise is dominant. The receive gain is improved by approximately 14 dB, compared with a case that the antenna for a satellite 13 in a stored state is used.

C/N in the case of waiting reception using the antenna for a satellite 13 in a stored state and in the case of waiting reception using the antenna for land 1 is respectively acquired based upon the improved quantity of the above receive gain. First, C/N acquired in the case of waiting reception using the antenna for a satellite 13 in a stored state is acquired according to the following expression:

[Mathematical expression 1]

$$C/N(\text{satellite}) = \frac{Pr[w/m^2] \times Ar[m^2] \times \eta r}{k(Ta + Tr)B} = \frac{\left\{ Pr[w/m^2] \times \left( \frac{Gr(\text{satellite}) \times \lambda^2 [m^{2-}]}{4\pi} \right) \right\}}{k(Ta + Tr)B} \quad (1)$$

$$= A \cdot Gr(\text{satellite})$$

"Pr" denotes the field intensity of a radio wave received from a satellite, "Ar" denotes antenna aperture area, "ηr" denotes antenna efficiency, "Gr" (satellite) denotes the receive gain (-20 dBi) of the antenna for a satellite 13 in a stored state, "λ" denotes the wavelength of a radio wave received from a satellite, "Ta" denotes the noise temperature (300 K) of the antenna for a satellite 13 in a stored state, "Tr" denotes the equivalent input noise temperature of the receiver for the satellite mobile communication system including the loss of the high frequency switching device for a satellite 14, "k" denotes Boltzmann's constant, "B" denotes noise bandwidth per channel, a constant A is acquired by an expression, $\{Pr(\lambda^2/4\pi)\}/\{k(Ta + Tr)B\}$. "[ ]" in the mathematical expression 1 denotes unit.

Next, C/N acquired in the case of waiting reception using the antenna for land 1 will be calculated.

In the case of waiting reception using the antenna for land 1, the deteriorated quantity of equivalent input noise temperature Tr due to the loss (= 0.5 dB) of one SPDT switch which is the loss of the high frequency switching device for land 2 and the loss of a path connecting the high frequency switching device for land 2 and the high frequency switching device for a satellite 14 is required to be added to a noise component N.

For a path for connecting the high frequency switching device for land 2 and the high frequency switching device for a satellite 14, a microstrip line of 50 Ω formed on a glass epoxy substrate the dielectric constant of which is 4.8 will be considered. As the loss per unit length of the microstrip line is 0.07 dB/cm, loss in the path proves to be approximately 0.3 dB if the length of the path is regarded as approximately equal to the width of the mobile communication terminal equipment (maximum 4 cm). Therefore, it can be considered that 0.8 dB acquired by adding 0.3 dB described above to the loss of the high frequency switching device for land 2, 0.5 dB is loss increased in the case of waiting reception using the antenna for land 1.

In this case, the equivalent input noise temperature Tr' of the receiver for the satellite mobile communication system viewed at the connection terminal of the antenna for land 1 is as follows:

[Mathematical expression 2]

$$Tr' = \left( 10^{\frac{0.8}{10}} - 1 \right) \times Tamb + 10^{\frac{0.8}{10}} \times Tr \tag{2}$$

"Tamb" denotes ambient temperature and is 350 K (approximately +55 ° C).

As NF of the receiver for the satellite mobile communication system including the high frequency switching device for a satellite 14 is 2 dB, equivalent input noise temperature Tr is as follows:

[Mathematical expression 3]

$$Tr = \left( 10^{\frac{2}{10}} - 1 \right) \times Tamb = 205[K] \tag{3}$$

When the expression (3) is put in the expression (2), the equivalent input noise temperature Tr' of the receiver of the satellite mobile communication system viewed from the connection terminal of the antenna for land 1 is as follows:

[Mathematical expression 4]

$$Tr' = \left( 10^{\frac{0.8}{10}} - 1 \right) \times 350 + 10^{\frac{0.8}{10}} \times 205 = 317[K] \tag{4}$$

Therefore, C/N (land) in the case of waiting reception using the antenna for land 1 based upon the expressions (2) to (4) is as follows:

[Mathematical expression 5]

$$C/N(\text{land}) = \frac{Pr[w/m^2] \times Gr(\text{land}) \times \frac{\lambda^2}{4\pi}}{k(Ta + Tr')B} = B \cdot Gr(\text{land}) \tag{5}$$

"Ta" dentes the noise temperature (300 K) of the antenna for land 1 and "Gr" (land) denotes receive gain (6 dBi) in case a radio wave from a satellite is received by the antenna for land 1.

The improved quantity ΔC/N of C/N in the case of waiting reception using the antenna for land 1 based upon the expressions (1) to (5) is as follows:

[Mathematical expression 6]

$$\Delta C/N = \frac{C/N(\text{land})}{C/N(\text{satellite})} = \frac{Gr(\text{land})}{Gr(\text{satellite})} \times \frac{Ta + Tr}{Ta + Tr'} \tag{6}$$

A logarithm (10 x log) on both sides is calculated to convert the expression (6) into power as follows:

[Mathematical expression 7]

$$\Delta C/N[dB] = 10\log\{Gr(\text{land})\} - 10\log\{Gr(\text{satellite})\} + \left\{10\log\left(\frac{Ta + Tr}{Ta + Tr'}\right)\right\} \tag{7}$$

$$= -6[dBi] - (-20[dBi]) + \left\{10\log\left(\frac{300[K] + 205[K]}{300[K] + 317[K]}\right)\right\}$$

$$= 13.1[dB]$$

Therefore, in the case of waiting reception using the antenna for land 1, C/N is improved by approximately 13 dB, compared with the case of waiting reception using the antenna for a satellite 13 in a stored state even if the increase of a noise component due to the increase of the path of a high-frequency signal is considered.

For example, if a signal the transmission speed of which is 18 k bps and which is modulated according to binary phase-shift keying (BPSK) is demodulated and viterbi deconding is executed based upon the signal encoded by convoluting with constraint length K = 9 and encoding ratio γ = 1/2 is decoded, receive field intensity is -140 dBm in the case of reception using the antenna for a satellite 13 in a stored state and is -126 dBm including the improved increment of antenna gain, 14 dB in the case of reception using the antenna for land 1.

Carrier power/noise power per 1 Hz (C/No)(satellite) in the case of waiting reception using the antenna for a satellite 13 in a stored state and C/No (land) in the case of waiting reception using the antenna for land 1 are respectively calculated as noise bandwidth B = 1 Hz using difference (= 14 dB) in receive gain between the antenna for a satellite 13 in a stored state and the antenna for land 1 and the expressions (1) and (5) as follows:

[Mathematical expression 8]

$$C/No(\text{satellite}) = -140[dBm] - 10\log\{k(Ta + Tr) \times 1000\} \tag{8}$$
$$= -140[dBm] - 10\log\{1.380662 \times 10^{-23} \times (300[K] + 205[K]) \times 1000\}$$
$$= -140[dBm] - (171.6[dBm])$$
$$= 31.6[dB]$$

$$C/No(\text{land}) = -126[dBm] - 10\log\{k(Ta + Tr') \times 1000\} \tag{9}$$
$$= -126[dBm] - 10\log\{1.380662 \times 10^{-23} \times (300[K] + 317[K]) \times 1000\}$$
$$= -126[dBm] - (-170.7[dBm])$$
$$= 44.7[dB]$$

When the energy of a signal per bit/noise power per 1 Hz (Eb/No) per bit (at the time of 18 k bps) is calculated, Eb/No in the case of reception using the antenna for a satellite 13 in a stored state is as follows:

[Mathematical expression 9]

$$Eb/No\text{(satellite)} = C/No\text{(satellite)}-10\log(18[K]) \tag{10}$$
$$= 31.6[dB]-42.5[dB]$$
$$= -10.9[dB]$$

As clear from the result of the calculation of the expression (10), as Eb < No, waiting reception using the antenna for a satellite 13 in a stored state is disabled.

In the meantime, waiting reception using the antenna for land 1 is as follows:

[Mathematical expression 10]

$$Eb/No\text{(land)} = C/No\text{(land)}-10\log(18[K]) \tag{11}$$
$$= 44.7[dB]-42.5[dB]$$
$$= 2.2[dB]$$

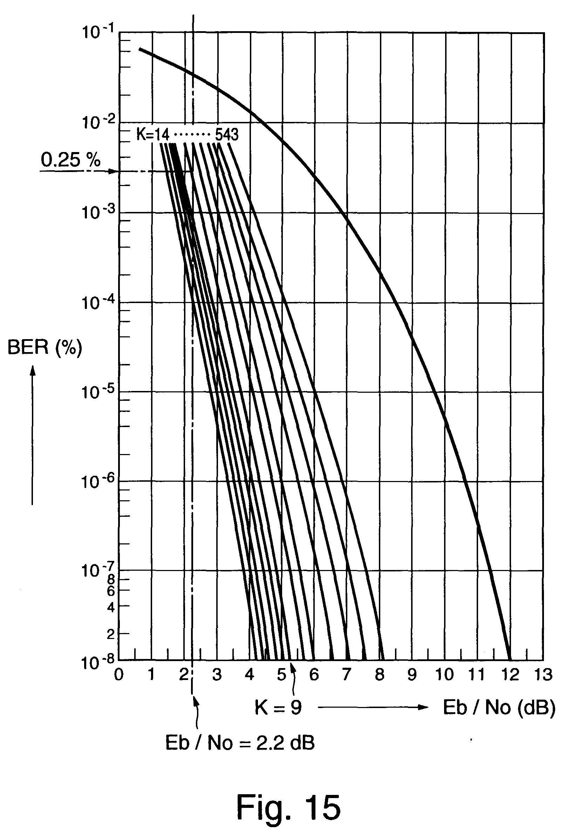

A bit error rate BER acquired when viterbi deconding is executed based upon a signal encoded by convoluting with K = 9 and $\gamma$ = 1/2 is decoded is approximately 0.25% based upon existing Eb/No to BER characteristic shown in Fig. 15 and the result of calculation in the expression (11), Eb/No (land) = 2.2 dB.

As generally, the value of a bit error rate BER allowable in a mobile communication network is approximately 10%, communication quality can be sufficiently secured even if a radio wave from a satellite is received by the antenna for land 1 after waiting.

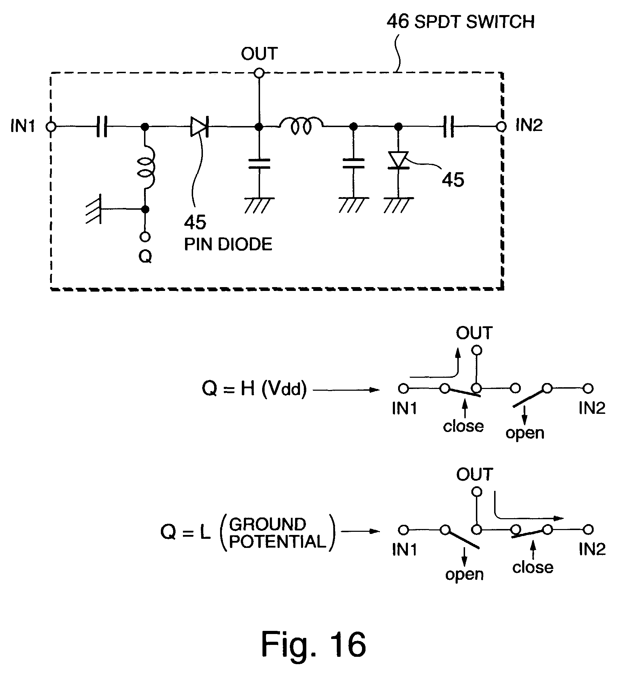

In the above description, the configuration provided with the SPDT switch using GaAs FET is shown as the high frequency switching device for a satellite and the high frequency switching device for land, however, the SPDT switch 46 may be also composed using a pindiode 45. Fig. 16 shows an example of the configuration of an SPDT switch using a pindiode. The path of a high-frequency signal can be switched as in the circuit shown in Fig. 9 by respectively using two SPDT switches 46 for the high frequency switching device for land and the high frequency switching device for a satellite.

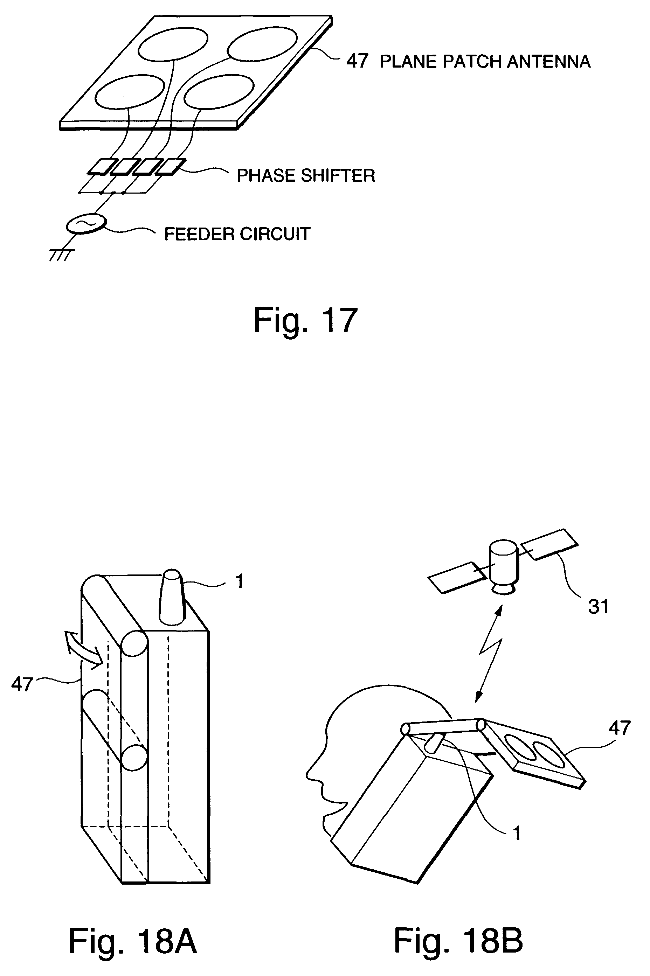

For an antenna for a satellite, a plane patch antenna 47 shown in Fig. 17 may be also used in place of the four-wire helical antenna 34 shown in Fig. 4. Figs. 18A and 18B respectively show a state in which the plane patch antenna is mounted on the mobile communication terminal equipment and a state in which the plane patch antenna is stored respectively in case the plane patch antenna 47 is adopted. As receive gain is also deteriorated in a stored state in case the plane patch antenna 47 is used for an antenna for a satellite, it is difficult to secure the performance of waiting reception. Therefore, in this case, the performance of waiting reception is also required to be secured by using the antenna for land 1.

For a land mobile communication network, a global system for mobile communication (GSM), European personal communication network (PCN), U.S. Personal Communications Services (PCS), U.S. DAMPS, Japanese personal digital cellular (PDC) system, U.S./Japanese code division multiple access (CDMA) and others are known.

Mobile communication terminal equipment in a triple mode or more can be composed by providing a land mobile communication system and a satellite mobile communication system respectively corresponding to two or more communication systems of the above land mobile communication networks.

For example, considering mobile communication terminal equipment which can be used in GSM, PCN and a satellite mobile communication network, an antenna for land is used in common in GSM and PCN and is matched with the frequency band (the band of 1.8 GHz) of PCN and a receive frequency band from a satellite (the band of 2.2 GHz). The similar switching function with two antennas for a satellite and for land can be applied even in a triple mode by providing a double-tuned matching circuit for matching the antenna for land with the frequency band of 1.8 to 2.2 GHz and the frequency band of GSM (the band of 800 MHz) to the antenna for land.

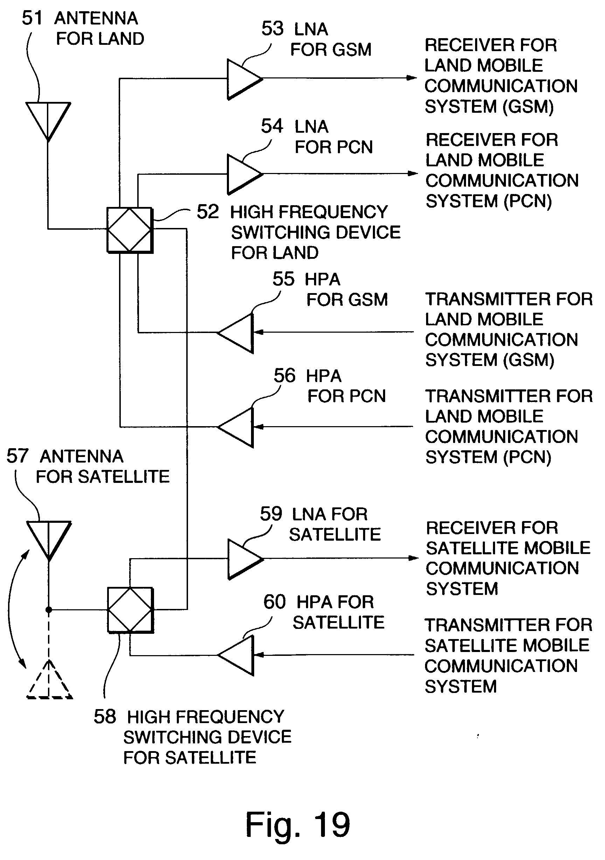

Fig. 19 shows an example of the configuration of a front end of such mobile communication terminal equipment in a triple mode. As shown in Fig. 19, the mobile communication terminal equipment in a triple mode is composed of a land mobile communication system (GSM) for communicating with the mobile communication network of GSM, a land mobile communication system (PCN) for communicating with the mobile communication network of PCN and a satellite mobile communication system for communicating with a satellite mobile communication network.

The two land mobile communication systems are provided with a sending/receiving shared device for land 52 for switching the path of a high-frequency signal corresponding to a sent state and a received state via an antenna for land 51 used in common, and the land mobile communication system (GSM) and the land mobile communication system (PCN) are respectively provided with a receiver and a transmitter respectively composed as the ones shown in Fig. 1. The satellite mobile communication system is also provided with the same receiver and transmitter as the ones shown in Fig. 1. In Fig. 19, only LNA (LNA for GSM 53, LNA for PCN 54 and LNA for a satellite 59) and HPA (HPA for GSM 55, HPA for PCN 56 and HPA for a satellite 60) of the respective components of each receiver and each transmitter in each system are shown.

In the mobile communication terminal equipment shown in Fig. 19, the respective receiver and transmitter of the two land mobile communication systems and the antenna for land are connected via a high frequency switching device for land 52 provided with four SPDT switches.

As the present invention is composed as described above, the following effect is produced.

Waiting reception is enabled even in a state in which the larger-sized antenna for a satellite than the antenna for land is stored by receiving a radio wave from a satellite via the antenna for land and inputting the received high-frequency signal to the receiver for the satellite mobile communication network. Therefore, as the configuration of the diversity receiver is not required to be adopted to enhance receiving performance and the increase of the number of the antennas and the weight, the increase in size and the complication of a front-end circuit are prevented, the portability of the mobile communication terminal equipment can be maintained.

As the existing land mobile communication network is not required to be changed, the mobile communication terminal equipment which can utilize the land mobile communication network and the satellite mobile communication network can be obtained at low cost and early.

## Claims

1. Mobile communication terminal equipment which can be used in a satellite mobile communication network via a satellite and a land mobile communication network via an earth base station, comprising:

   a high frequency switching device for a satellite for connecting the path of a high-frequency signal in a transmitter and a receiver respectively for said satellite mobile communication network to an antenna for a satellite which is an antenna for said satellite mobile communication network according to a sent state and a received state;

   a high frequency switching device for land for connecting the path of a high-frequency signal in a transmitter and a receiver respectively for said land mobile communication network to an antenna for land which is an antenna for said land mobile communication network according to a sent state and a received state;

   a high-frequency routing line for connecting said high frequency switching device for a satellite and said high frequency switching device for land so that a high-frequency signal received via said antenna for land is input to the receiver for said satellite mobile communication network; and

   a high frequency switching device controller for detecting whether said antenna for a satellite is in a stored state or not when a radio wave from said satellite is received during waiting, for connecting said high frequency switching device for a satellite and said high frequency switching device for land via said high-frequency routing line in case said antenna for a satellite is stored and for connecting the transmitter or the receiver for said satellite mobile communication network and said antenna for a satellite by said high frequency switching device for a satellite according to a sent state or a received state in case said antenna for a satellite is not stored.

2. Mobile communication terminal equipment according to Claim 1, wherein:

   said antenna for land is respectively matched with the frequency band of a radio wave sent or received in said land mobile communication network and the frequency band of a radio wave received in said satellite mobile communication network.

3. Mobile communication terminal equipment according to Claim 1 or 2, wherein:

   said antenna for land is a dipole linear polarization antenna provided with a double-tuned matching circuit.

4. Mobile communication terminal equipment according to any of Claims 1 to 3, wherein:

   said antenna for a satellite is a helical antenna for circular polarization provided with plural helical elements.

5. Mobile communication terminal equipment according to any of Claims 1 to 3, wherein:

   said antenna for a satellite is a plane patch antenna.

6. Mobile communication terminal equipment according to any of Claims 1 to 5, wherein:

   said high frequency switching device for a satellite and said high frequency switching device for land are respectively provided with plural single-pole double-throw (SPDT) switches.

7. Mobile communication terminal equipment according to Claim 6, wherein:

   said SPDT switch is composed of plural GaAs field-effect transistors (FETs).

8. Mobile communication terminal equipment according to Claim 6, wherein:

   said SPDT switch is composed of plural pindiodes.

9. A waiting reception method of mobile communication terminal equipment for receiving a radio wave from said satellite during waiting by mobile communication terminal equipment which can be used in a satellite mobile communication network via a satellite and a land mobile communication network via an earth base station, wherein:

   a radio wave from said satellite is received by an antenna for land which is an antenna for said land mobile communication network in case an antenna for a satellite which is an antenna for said satellite mobile communication network is stored; and

   the high-frequency signal received by said antenna for land is input to a receiver for said satellite mobile communication network.

10. A waiting reception method of mobile communication terminal equipment according to Claim 9, wherein:

    said antenna for land is respectively matched with the frequency band of a radio wave sent or received in said land mobile communication network and the frequency band of a radio wave received in said satellite mobile communication network beforehand.

11. A waiting reception method of mobile communication terminal equipment according to Claim 9 or 10, wherein:

    a high-frequency signal received by said antenna for land is input to a receiver for said satellite mobile communication network via said SPDT switch.

Fig. 1

30 LAND BASE STATION

1

3

LNA

CONNECTED TO RECEIVED
FREQUENCY CONVERTER
FOR LAND

2

HPA

CONNECTED FROM SENT
FREQUENCY CONVERTER
FOR LAND

4

31 SATELLITE

13

15

LNA

CONNECTED TO RECEIVED
FREQUENCY CONVERTER
FOR SATELLITE

14

HPA

CONNECTED FROM SENT
FREQUENCY CONVERTER
FOR SATELLITE

16

Fig. 2

**31 SATELLITE**

1

3
LNA — CONNECTED TO RECEIVED FREQUENCY CONVERTER FOR LAND

2

4
HPA — CONNECTED FROM SENT FREQUENCY CONVERTER FOR LAND

26
HIGH FREQUENCY SWITCHING DEVICE CONTROLLER

USED STATE

15
LNA — CONNECTED TO RECEIVED FREQUENCY CONVERTER FOR SATELLITE

14

13

STORED STATE

16
HPA — CONNECTED FROM SENT FREQUENCY CONVERTER FOR SATELLITE

Fig. 3

Fig. 4

RADOME

34

13

33 32

ROTARY
JOINT

## Fig. 5

RADOME

1

35 DIPOLE LINEAR
POLARIZATION ANTENNA

36 DOUBLE-TUNED
MATCHING CIRCUIT

37 FEEDER CIRCUIT

## Fig. 6

31

13

1

100
MOBILE COMMUNICATION
TERMINAL EQUIPMENT

Fig. 7A

31

1

13

100
MOBILE COMMUNICATION
TERMINAL EQUIPMENT

Fig. 7B

MOBILE COMMUNICATION
TERMINAL EQUIPMENT

# Fig. 8A

MOBILE COMMUNICATION
TERMINAL EQUIPMENT

# Fig. 8B

**Fig. 9**

**Fig. 10**

| SPDT | INPUT TERMINAL | INPUT STATE |
|---|---|---|
| FIRST SPDT SWITCH | Q1 | L |
| | Q2 | H |
| SECOND SPDT SWITCH | Q3 | L |
| | Q4 | H |
| THIRD SPDT SWITCH | Q5 | N/A |
| | Q6 | $\overline{Q5}$ |
| FOURTH SPDT SWITCH | Q7 | N/A |
| | Q8 | $\overline{Q7}$ |

H = Vdd

L = GROUND POTENTIAL

N/A = NO ASSIGNMENT

| SPDT | INPUT TERMINAL | INPUT STATE |
|---|---|---|
| FIRST SPDT SWITCH | Q1 | L |
| | Q2 | H |
| SECOND SPDT SWITCH | Q3 | L |
| | Q4 | H |
| THIRD SPDT SWITCH | Q5 | N/A |
| | Q6 | $\overline{Q5}$ |
| FOURTH SPDT SWITCH | Q7 | N/A |
| | Q8 | $\overline{Q7}$ |

H = Vdd
L = GROUND POTENTIAL
N/A = NO ASSIGNMENT

## Fig. 11

| SPDT | INPUT TERMINAL | INPUT STATE |
|---|---|---|
| FIRST SPDT SWITCH | Q1 | N/A |
| | Q2 | $\overline{Q1}$ |
| SECOND SPDT SWITCH | Q3 | N/A |
| | Q4 | $\overline{Q3}$ |
| THIRD SPDT SWITCH | Q5 | H |
| | Q6 | L |
| FOURTH SPDT SWITCH | Q7 | L |
| | Q8 | H |

H = Vdd
L = GROUND POTENTIAL
N/A = NO ASSIGNMENT

Fig. 12

Fig. 13

| SPDT | INPUT TERMINAL | INPUT STATE |
|---|---|---|
| FIRST SPDT SWITCH | Q1 | N/A |
| | Q2 | $\overline{Q1}$ |
| SECOND SPDT SWITCH | Q3 | N/A |
| | Q4 | $\overline{Q3}$ |
| THIRD SPDT SWITCH | Q5 | H |
| | Q6 | L |
| FOURTH SPDT SWITCH | Q7 | H |
| | Q8 | L |

H = Vdd

L = GROUND POTENTIAL

N/A = NO ASSIGNMENT

| SPDT | INPUT TERMINAL | INPUT STATE |
|---|---|---|
| FIRST SPDT SWITCH | Q1 | H |
| | Q2 | L |
| SECOND SPDT SWITCH | Q3 | H |
| | Q4 | L |
| THIRD SPDT SWITCH | Q5 | L |
| | Q6 | H |
| FOURTH SPDT SWITCH | Q7 | N/A |
| | Q8 | $\overline{Q7}$ |

H = Vdd

L = GROUND POTENTIAL

N/A = NO ASSIGNMENT

Fig. 14

Fig. 15

**46 SPDT SWITCH**

OUT

IN1

IN2

45
PIN DIODE

45

Q

$Q = H (Vdd)$

OUT

IN1

close    open

IN2

$Q = L \begin{pmatrix} GROUND \\ POTENTIAL \end{pmatrix}$

OUT

IN1

open    close

IN2

# Fig. 16

47 PLANE PATCH ANTENNA

PHASE SHIFTER

FEEDER CIRCUIT

## Fig. 17

## Fig. 18A

## Fig. 18B

51 ANTENNA
FOR LAND

53 LNA
FOR GSM

RECEIVER FOR
LAND MOBILE
COMMUNICATION
SYSTEM (GSM)

54 LNA
FOR PCN

RECEIVER FOR
LAND MOBILE
COMMUNICATION
SYSTEM (PCN)

52 HIGH FREQUENCY
SWITCHING DEVICE
FOR LAND

55 HPA
FOR GSM

TRANSMITTER FOR
LAND MOBILE
COMMUNICATION
SYSTEM (GSM)

56 HPA
FOR PCN

TRANSMITTER FOR
LAND MOBILE
COMMUNICATION
SYSTEM (PCN)

57 ANTENNA
FOR SATELLITE

59 LNA FOR
SATELLITE

RECEIVER FOR
SATELLITE MOBILE
COMMUNICATION
SYSTEM

60 HPA FOR
SATELLITE

TRANSMITTER FOR
SATELLITE MOBILE
COMMUNICATION
SYSTEM

58 HIGH FREQUENCY
SWITCHING DEVICE
FOR SATELLITE

Fig. 19

101 COMMUNICATION
SATELLITE

MOBILE
COMMUNICATION
TERMINAL
EQUIPMENT 100

EARTH
BASE
STATION
103

102

100

103

102 SATELLITE
BASE
STATION

103

103

Fig. 20

Fig. 21    (PRIOR ART)

226a
229

FIRST
ANTENNA

ANTENNA
SWITCHING
MEANS

227

RECEIVING
SECTION

SECOND
ANTENNA

FIELD INTENSITY
JUDGING MEANS

228

226b

Fig. 22    (PRIOR ART)

301a
302
303
304
305
306

FIRST
ANTENNA

ANTENNA
SWITCHING
MEANS

FREQUENCY
CONVERTING
MEANS

BAND
LIMITING
MEANS

MODULATED
SIGNAL
COMPONENT
CALCULATING
MEANS

DECODING
MEANS

SECOND
ANTENNA

308

301b

NOISE
COMPONENT
CALCULATING
MEANS

ANTENNA
SWITCHING
CONTROL
MEANS

307

Fig. 23    (PRIOR ART)

Fig. 24 (PRIOR ART)

EP 0 940 924 A2